# EUROPEAN PATENT APPLICATION

(11) **EP 0 893 704 A2**
(43) Date of publication of application: **27.01.1999**
(21) Application number: 98110506.7
(22) Date of filing: 09.06.1998
(51) Int. Cl.: G01S 17/02

(54) **Imaging system with optical filter for scattered laser radiation**

(30) Priority: 25.07.1997 US 900897
(71) Applicant: TRW Inc., Redondo Beach, California 90278 (US)
(72) Inventor: Chodzko, Richard A., Rancho Palos Verdes, CA 90275 (US)
(74) Representative: Schmidt, Steffen J., Dipl.-Ing.

(57) **Abstract**

An imaging system is provided for viewing a target. The imaging system includes a first diffraction grating receiving collimated infrared light containing infrared (IR) object light generated by the target and IR laser light produced when the laser beam contacts the target. The diffraction grating disperses the object and laser light. A first lens is aligned with the diffraction grating to focus each wavelength at a separate focal point. A mask is disposed at the focal plane of the first lens. The mask is divided into a plurality of segments, each of which is uniquely associated with a spectral line of a wavelength of object or laser light. The mask segments include either a blocking region or an aperture. Each blocking region is located at a spectral line of laser light. The apertures extend between the blocking regions. The mask blocks the laser light and passes the object light. A second lens is aligned to receive and focus the object light passed through the mask onto an image plane. A second diffraction grating is positioned at the image plane of the second lens. The second diffraction grating recombines the object light into a single output image with the laser light removed therefrom.

## Description

### BACKGROUND OF THE INVENTION

The present invention generally relates to an imaging system for use with a laser beam targeting device. More specifically, the invention relates to an imaging system which filters laser radiation from the image to be viewed to allow the target to be viewed while being irradiated by the laser.

In the past, imaging systems have been proposed for viewing and tracking objects, such as targets, in conjunction with laser targeting devices. Typically, imaging systems initially locate a target and track the trajectory of the target. With advancements in imaging technology, it has became desirable to track targets by viewing infrared (IR) wavelength rays or IR signatures generated by and emitted from the target. Viewing infrared wavelength rays may allow the imaging system to track heat sources within the target, such as the exhaust of a rocket. Once the imaging system obtains the trajectory of the target, a laser beam may be directed at the target for various reasons, such as to destroy the target. By way of example only, the laser beam may be a chemical laser, such as a continuous wave deuterium fluoride laser, hydrogen fluoride laser and the like. Often it is desirable to continue to view the IR signature of the target through the imaging system while the laser is incident thereon.

However, some laser beams render it difficult to view the target during irradiation. The IR signature generated by the target comprises light rays of different wavelengths spanning a spectral range to which the imaging system is tuned. The laser beam also comprises light rays of wavelengths within the infrared spectral range of the imaging system. For instance, the IR wavelengths of the rays generated by the target may range between 3.6 microns-4.0 microns. A deuterium fluoride laser beam may include rays having wavelengths of 3.6798 microns and 3.7153 microns.

Each wavelength is associated with a unique spectral line in the spectral range. The individual wavelengths forming most chemical laser beams are associated with spectral lines separated from one another along the IR spectral range by significant distances. Spectral lines associated with IR signatures produced by a target typically fall between the spectral lines associated with the wavelengths forming the laser beam.

When the laser beam contacts the target, the IR light from the laser beam is scattered and radiation therefrom is incident upon the imaging system. The radiation is composed of the wavelengths initially forming the laser beam and thus having spectral lines in the IR spectral range to which the imaging system is tuned. Thus, the imaging system detects the radiation wavelengths scattered when the laser beam, contacts the target, along with the target generated IR wavelengths. The intensity of the scattered laser radiation incident upon the imaging system may be substantial relative to the intensity of the target generated IR wavelengths. Thus, the scattered laser radiation may overshadow the target generated IR wavelengths. The scattered radiation is detected as noise by the imaging system. The quantity of noise associated with the scattered laser radiation may become so significant as to prevent viewing of the area of interest.

Another application of interest is in materials processing, i.e. in cutting, welding and heat treating metals with a laser beam. The scattered laser radiation would be a source of noise which would prevent viewing the material with an IR imaging system. With the filter, the cutting or welding region could be viewed in detail to improve accuracy of operations.

Heretofore, no system has been proposed which adequately filters out the wavelengths associated with scattered laser radiation from the cumulative IR light detected by the imaging system. It an object of the present invention to provide such a system.

### BRIEF SUMMARY OF THE INVENTION

It is an object of the present invention to provide an imaging system with an optical filter capable of filtering out wavelengths associated with scattered laser radiation.

It is a further object of the present invention to provide an imaging system which increases the target signal to laser noise ratio.

It is a further object of the present invention to provide an imaging system with a laser filter which is simple and easy to fabricate.

It is a corollary object of the present invention to provide an imaging system with a laser filter which maintains a high percentage of transmissivity of the infrared light generated by the target.

These and other objects are achieved by an imaging system according to the preferred embodiment of the present invention for viewing a target that is irradiated with a laser beam. The imaging system includes a first diffraction grating receiving collimated infrared light containing infrared (IR) wavelength light generated by a target to be viewed. The collimated infrared light further contains noise IR wavelengths produced by the laser beam when incident upon the target. The diffraction grating disperses the infrared object and laser light along a predefined spectral range. A first lens is aligned with the diffraction grating to focus the dispersed light into spatially separated intensity peaks for each wavelength. A mask is disposed downstream of the first lens to receive the focused light. The mask is divided into a plurality of segments, each of which is uniquely associated with a spectral line of a wavelength of object or laser light. The mask segments include either a blocking region or an aperture extending along the corresponding spectral line. Each blocking region is located at a spectral line of laser light. The apertures extend between the blocking regions to span multiple spectral lines of object light. The mask blocks the laser light and passes the object light. A second lens is located downstream of the mask along a path of the object light passed through the mask. The second lens focuses the object light onto an image plane. A second diffraction grating of the same period as the first grating is positioned at the image plane of the second lens. The second diffraction grating recombines the object light into a single output image with the laser light removed therefrom.

### BRIEF DESCRIPTION OF THE SEVERAL VIEWS OF THE DRAWING

Fig. 1 generally illustrates a block diagram of an imaging system according to a preferred embodiment of the present invention.
Fig. 2 generally illustrates a block diagram of a spectral filter utilized in connection with the preferred embodiment of the present invention.
Fig. 3 illustrates a more detailed view of the front end portion of the spectral filter of Fig. 2 according to the preferred embodiment of the present invention.

### DETAILED DESCRIPTION OF THE INVENTION

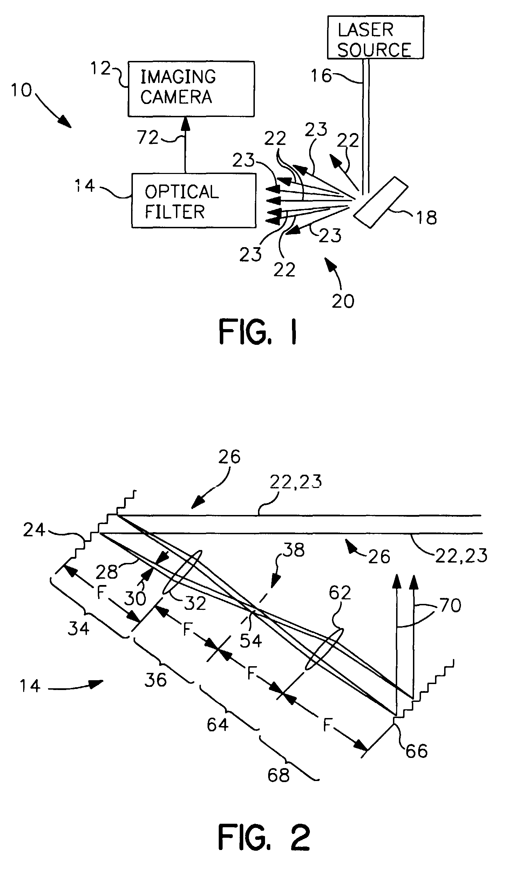

Fig. 1 generally illustrates an imaging system 10 according to the preferred embodiment of the present invention. The imaging system 10 includes an imaging camera 12 and optical filter 14. The imaging system 10 tracks movement of a target 18 before and while a laser beam 16 is incident upon the target 18. The laser beam 16 may be one of several laser beam types such as a molecular or atomic laser beam. When the laser beam 16 contacts the target 18, a portion of the laser beam 16 is scattered to produce radiation 20 comprised of infrared (IR) laser light components 22 having wavelengths equaling the wavelengths of the IR light forming the laser beam 16. By way of example only, a deuterium fluoride laser beam may comprise 10 or more wavelengths. Thus, the radiation 20 similarly may comprise multiple IR laser light components 22. Also, the target generates infrared (IR) object light components 23, such as from thermal radiation or from the exhaust of a rocket.

The optical filter 14 blocks or filters out the radiation 20 produced from the laser beam 16. By filtering out radiation 20, the optical filter 14 enables the imaging camera 12 to continue to track the target 18 along its trajectory by the IR object light components 23.

Next, the optical filter 14 is described in more detail in connection with Fig. 2. The optical filter 14 includes a first diffraction grating 24 positioned to receive incident light 26. Incident light 26 is received in parallel and contains multiple wavelengths including the IR laser light components 22 and IR object light components 23. The diffraction grating 24 separates the incident light 26 into multiple discrete rays by bending light of different wavelengths by different angles. The diffraction grating 24 bends the light over a dispersion angle △Θ associated with the spectral range of the filter 14. The dispersion angle △Θ of the filter 14 corresponds to the angle 30 between the highest and lowest wavelengths 28 of the laser beam 16. The angle △Θ may vary so long as the angular dispersion of the diffraction grating 24 sufficiently separates the wavelengths 28 to enable the filter 14 to operate. The wavelengths 28 are incident upon a lens 32 which is located a distance 34 from the diffraction grating 24. The distance 34 corresponds to the focal length of the lens 32 so that the diffraction grating 24 is located at the object plane of the lens 32. Accordingly, an image is focused by the lens 32 at a focal plane 38 on an opposite side of the lens 32 a distance 36 from the lens 32. The distance 36 may equal the focal length F of the lens 32. Optionally, a concave mirror may be substituted for the lens 32. While the lens 32 may be presumed to produce negligible dispersion of the light rays incident thereon, such negligible dispersion may be further eliminated through the use of concave mirrors.

Each wavelength 28 corresponds to, a separate spectral line. The lens 32 focuses each wavelength component 28 to a separate individual focal point at the focal plane 38 of the lens 32. A mask 54 extends along the focal plane 38. The mask 54 blocks the IR laser light components 22 and passes the object light components 23. A second lens 62 is provided downstream of the mask 54. The second lens 62 is located from the mask 54 a distance 64 corresponding to the focal length F of lens 62, in order to place the mask 54 at the object plane of the lens 62. A second diffraction grating 66 is located downstream of the lens 62 a distance 68 corresponding to the focal length F of the lens 62. The second diffraction grating 66 is located at the image plane of the second lens 62.

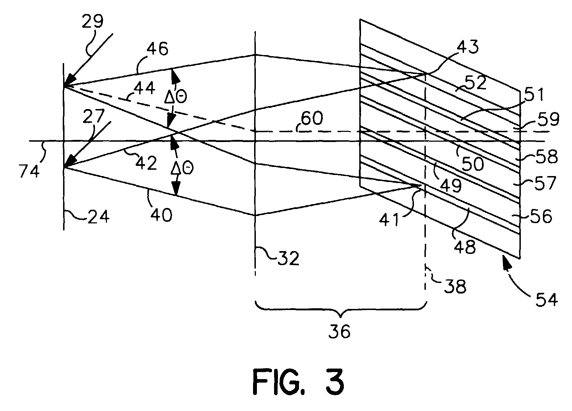

Fig. 3 illustrates the cooperation between the diffraction grating 24 and lens 32 in more detail. In Fig. 3, two parallel incident rays 27 and 29 contain multiple wavelengths which are dispersed by the diffraction grating 24. The lowest and highest wavelengths 40 and 42 of the incident ray 27 may be dispersed at an angle △Θ. The lowest and highest wavelengths 44 and 46 of incident ray 29 may be dispersed at a dispersion angle △Θ. The lowest wavelengths 40 and 44 are focused by the lens 32 at a point 41 upon the focal plane 38 at a distance 36 from the lens 32. Similarly, the highest wavelengths 42 and 46 are focused by the lens 32 at a point 43 at the focal plane 38. Diffraction grating 24 and lens 32 cooperate to focus each wavelength of the incident light 27 and 29 at different points upon the focal plane 38 based on the wavelength of the ray. While not illustrated, the diffraction grating 24 and lens 32 perform a similar focusing operation with respect to each wavelength of the IR laser light components 22 and the IR object light components 23. In the example of Fig. 3, the laser beam 16 may include five wavelength components. The lens 36 focuses the laser wavelengths at five discrete points (only points 41 and 43 are shown).

The mask 54 is divided into segments, each of which corresponds to a spectral line. The mask includes blocking regions 48-52 at the segments corresponding to the spectral lines of the IR laser light components 22. The mask includes apertures 56-59 at each of the segments (between the blocking regions) corresponding to the spectral lines of the IR object light components 23. Adjacent spectral lines of the IR laser light components 22 may be separated by several spectral lines of the IR object light components 23. Thus, apertures 56-59 may each span multiple segments. Wavelengths focused at apertures 56-59 are allowed to pass through the mask 54 as illustrated by light ray 60. The light ray 60 that passes through the mask 54 continues onward until contacting the second lens 62 (Fig. 2). While not illustrated, multiple rays pass through apertures 56-59, one ray per spectral line. The second lens 62 receives diverging incoming rays and focuses same upon the second diffraction grating 66 to produce multi-wavelength output light rays 70 having the wavelengths of the input light 26, except for the blocked IR laser light components 22. The second diffraction grating 66 collimates the multi-wavelength output rays 70 which are passed to the imaging camera 12 (Fig. 1) via an optical link 72. The diffraction grating 66 produces an unsheared parallel output beam.

Next, an exemplary operation of the preferred embodiment is described in connection with Figs. 2 and 3. A multi-line input beam comprised of multiple parallel lines or rays 26 is incident upon the diffraction grating 24. Optionally, the diffraction grating may have 450 dispersion lines per millimeter. The first order diffracted wavelengths 28 are transmitted through lens 32 (or a concave mirror) of focal length F to be emitted therefrom in parallel with one another. The wavelengths 40, 42, 44 and 46 (Fig. 3) of the laser beam 16 are focused at individual points 41 and 43 upon the mask 54. The wavelengths associated with the IR object light, such as ray 60, are focused at points corresponding to the apertures of the mask 54. Thus, all of the wavelengths of the laser beam 16 are blocked and the remaining wavelengths are transmitted therethrough to the second lens 62.

Preferably, the spectral lines of the laser beam 16 are well separated from one another as compared to the line width associated with a single wavelength. Stated another way, a substantial distance exists between adjacent blocking regions 48-52 in order to afford apertures 56-59 of sufficient width to pass a large percentage of the incident light having wavelengths other than the wavelengths of the laser beam 16. By way of example, molecular and some atomic laser beams exhibit the above desired wavelength distribution. It is desirable to utilize a molecular or atomic laser beam, in which a large distribution exists between wavelengths in order to maximize the throughput of the mask 54. A high efficiency diffraction grating 24 is also required to maximize the throughput.

Optionally, the second grating 66 may be removed if the user is only interested in the spectral content of the filtered rays passed through the lens 62.

A geometric optics ray matrix analysis of the optical system illustrates that the focal point of either of lenses 32 and 62 is displaced a distance F△Θ from the optical axis (illustrated at 74 in Fig. 3) due to the diffraction grating dispersion. As illustrated in Fig. 2, the beam transmitted at the exit plane of the second lens 62 has a spectral shear which may be removed by placing a diffraction grating 66 at a distance 68 from the lens 62, where the distance 68 corresponds to the imaging plane of the object plane at diffraction grating 24. The second diffraction grating 66 may produce an unsheared parallel output beam with all wavelengths overlapped and the laser spectral lines removed. According to the foregoing process, a target 18 may be viewed within the spectral range associated with the laser beam 16 while eliminating or greatly reducing noise produced by the laser beam 16.

By way of example, the laser beam may be a deuterium fluoride laser, hydrogen fluoride laser, and the like. The mask 54 be made by photolithography. The diffraction gratings 24 and 66 may include 450 spectral lines per millimeter. The focal length of lenses 32 and 62 may equal 20 cm. Homogeneous line widths may equal 0.05 cm⁻¹ atm. For the present example, two wavelengths of the deuterium fluoride laser may equal 3.6798 µm and 3.715 µm. The filter mask may have two blockage regions 0.15 mm wide with a 5 cm open region between the 3.6798 µm wavelengths assuming one atmosphere pressure. This example produces approximately 97% transmission of rays within the spectral range of the deuterium fluoride laser beam.

Optionally, other types of atomic and molecular lasers may be utilized, such as CO, CO₂ lasers in the 5 and 10 µm spectral regions and the like.

While particular elements, embodiments and applications of the present invention have been shown and described, it will be understood, of course, that the invention is not limited thereto since modifications may be made by those skilled in the art, particularly in light of the foregoing teachings. It is therefore contemplated by the appended claims to cover such modifications as incorporate those features which come within the spirit and scope of the invention.

## Claims

1. An imaging system for viewing a target while the target is irradiated with a laser beam having multiple components, each component having a different wavelength, adjacent wavelengths of the laser being spaced apart by several wavelengths, said system comprising:
a first diffraction grating receiving an input image containing infrared object light generated by a target to be viewed and containing infrared laser light produced as radiation from the laser beam when incident upon the target, said diffraction grating disbursing wavelengths of said infrared object and laser light along a spectral range, each wavelength of said infrared object and laser light being emitted from said diffraction grating at a different angle uniquely associated with a spectral line of a corresponding wavelength;
a first lens, aligned with said first diffraction grating, said first lens focusing disbursed wavelengths of said infrared object and laser light to a first focal plane;
a mask, aligned with said first lens and located at said first focal plane, said mask being divided into a plurality of segments, each segment uniquely corresponding to a spectral line of one wavelength of said infrared object and laser light, said mask including blocking regions and apertures, said blocking regions extending along segments associated with said spectral lines of said infrared laser light, said apertures spanning segments located between said blocking regions, said mask blocking said infrared laser light and passing said infrared object light;
a second lens, aligned with said mask to receive infrared object light passed through apertures in said mask, said second lens focusing said infrared object light onto a second image plane; and
a second diffraction grating, positioned at said second image plane, said second diffraction grating combining said infrared object light to produce an output image with said infrared laser light removed therefrom.

2. An imaging system, according to claim 1, wherein a distance between said first lens and said first diffraction grating equals a focal length of said first lens to locate said diffraction grating at an object plane of said first lens.

3. An imaging system, according to claim 1, wherein a distance between said first lens and said mask equals a focal length of said first lens to located said mask at said second image plane.

4. An imaging system, according to claim 1, wherein a distance between said second lens and said mask corresponds to a focal length of said second lens to locate said mask at an object plane of said second lens.

5. An imaging system, according to claim 1, wherein a distance between said second lens and second diffraction grating equals a focal length of said second lens to locate said second diffraction grating at said second image plane.

6. An imaging system, according to claim 1, wherein said infrared laser light contains wavelengths of scattered radiation emitted from a deuterium fluoride laser beam upon contacting a target.

7. An imaging system, according to claim 1, wherein said infrared laser light contains wavelengths of scattered radiation emitted from a hydrogen fluoride laser beam upon contacting a target.

8. An imaging system, according to claim 1, wherein said infrared laser light contains wavelengths of scattered radiation emitted from a carbon monoxide laser beam upon contacting a target.

9. An imaging system, according to claim 1, wherein said infrared laser light contains wavelengths of scattered radiation emitted from a carbon dioxide laser beam upon contacting a target.

10. An imaging system, according to claim 1, wherein said infrared laser light includes at least two wavelengths having spectral lines separated from one another by multiple spectral lines.

11. An imaging system, according to claim 1, wherein said infrared laser light includes at least 10 wavelengths, adjacent wavelengths of said infrared laser light having spectral lines separated from one another by multiple spectral lines associated with wavelengths of infrared object light.

12. An imaging system, according to claim 1, wherein said mask includes 10 blocking regions or more, each of which corresponds to one spectral laser line.

13. An imaging system, according to claim 1, wherein at least one aperture corresponds to multiple spectral lines of said infrared object light such that said mask transmits at least 97% of said infrared object light received by said first diffraction grating.

14. An imaging system, according to claim 1, wherein said first and second diffraction gratings each include approximately 450 dispersion lines per millimeter.

15. An imaging system, according to claim 1, wherein a focal length of at least one of said first and second lenses is approximately 20 cm.

16. An imaging system. according to claim 1, wherein said mask is divided into spectral lines having substantially equal widths of approximately 0.05 cm⁻¹ atm.

17. An imaging system, according to claim 1, wherein said blocking regions are separated by at least 5 mm and a width of each blocking region is substantially equal to 0.15 mm.

18. An imaging system, according to claim 1, wherein said infrared laser light includes at least first and second wavelengths of approximately 3.6798 µm and a 3.7153 µm, respectively.
